(19) Europäisches Patentamt
European Patent Office
Office européen des brevets

(11) **EP 2 798 633 B1**

(12) **EUROPEAN PATENT SPECIFICATION**

(45) Date of publication and mention
of the grant of the patent:
**16.05.2018 Bulletin 2018/20**

(21) Application number: **11878885.0**

(22) Date of filing: **29.12.2011**

(51) Int Cl.:
*G10L 15/14* $^{(2006.01)}$   *G10L 15/24* $^{(2013.01)}$

(86) International application number:
**PCT/US2011/067856**

(87) International publication number:
**WO 2013/101073 (04.07.2013 Gazette 2013/27)**

(54) **ACOUSTIC SIGNAL MODIFICATION**

AKUSTISCHE SIGNALMODIFIKATION

MODIFICATION DE SIGNAUX ACOUSTIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**05.11.2014 Bulletin 2014/45**

(73) Proprietor: **Intel Corporation
Santa Clara, CA 95054 (US)**

(72) Inventor: **GRAUMANN, David, L.
Portland, OR 97229 (US)**

(74) Representative: **Goddar, Heinz J.
Boehmert & Boehmert
Anwaltspartnerschaft mbB
Pettenkoferstrasse 22
80336 München (DE)**

(56) References cited:
**EP-A1- 2 389 016       EP-A2- 1 901 282
WO-A1-2009/126561   US-A1- 2008 071 547
US-A1- 2009 086 998   US-B2- 7 664 639
US-B2- 7 693 720**

**Description**

TECHNICAL FIELD

This disclosure generally relates to acoustic signals, and in particular to modifying acoustic signals.

BACKGROUND

Speech recognition technology can generate text from acoustic signals collected by a microphone actuated by sound. Speech recognition may rely on a speech recognition engine that interprets the acoustic signals from one or more microphones and interprets the signals as words by applying known algorithms or models, for example, Hidden Markov Models (HMM). Such technology has been increasingly deployed for a variety of purposes, including electronic dictation, voice command recognition, and telephone-based interactive voice response customer service engines.

Vehicular environments may particularly benefit from speech recognition technology, because it is desirable for drivers of vehicles to provide instructions and control the vehicle and other peripherals in a hands-free manner, such as with the use of voice commands recognized by a speech recognition engine. Therefore, deployment of speech recognition technology in automotive applications may provide for improved road safety and an improved driver experience.

The performance of speech recognition technology has improved with the development of faster processors and improved speech recognition methods. In particular, there have been improvements in the accuracy of recognizing words by the speech recognition engines. In other words, there have been improvements in accuracy-based metrics for speech recognition, such as word error rates (WERs).

Despite improvements and advances in the performance of speech recognition technology, accuracy of speech recognition in certain environments, such as vehicular environments, may still be relatively error prone. For example, speech recognition engines may be suboptimal, or otherwise degraded, in relatively noisy environments or in a closed chamber, such as a vehicle cockpit, where sound waves may arrive at a microphone via multiple paths and in the presence of other noises, such as engine noises, road noises, and the like. Prior art US 2009/086998 aims at improving signals obtained from multiple sources and received at several microphones of an array by exploiting estimated sound source location information. The system separates the sound sources, estimates the location of each sound source and uses the location to improve the sound quality of the separated signal relating to the respective sound source.

BRIEF DESCRIPTION OF THE FIGURES

Reference will now be made to the accompanying drawings, which are not necessarily drawn to scale, and wherein:

FIG. 1 is a simplified diagram illustrating an example method associated with a vehicle for modifying acoustic signals in accordance with embodiments of the disclosure.
FIG. 2 is a flow diagram illustrating an example method of providing modified acoustic signals to a speech recognition engine in accordance with embodiments of the disclosure.
FIG. 3 is a simplified schematic top down view diagram illustrating an example cockpit of the vehicle of FIG. 1, wherein an example acoustic model may be generated in accordance with embodiments of the disclosure.
FIG. 4 is a simplified schematic side view diagram illustrating the example cockpit of FIG. 3, wherein an example acoustic model may be generated in accordance with embodiments of the disclosure.
FIG. 5 is a simplified schematic top down view diagram illustrating the example cockpit of FIG. 3, wherein an example audio element may generate sound and produce acoustic signals from one or more microphones in accordance with embodiments of the disclosure.
FIG. 6 is a simplified block diagram illustrating an example system for modifying acoustic signals in accordance with embodiments of the disclosure.
FIG. 7 is a simplified schematic view illustrating an example audio element that is tracked to modify acoustic signals in accordance with embodiments of the disclosure.
FIG. 8 is a simplified schematic view illustrating the cockpit of FIG. 3, wherein example sound paths are transmitted from an audio element to one or more microphones in accordance with embodiments of the disclosure.
FIG. 9 is a simplified block diagram illustrating an example estimation of audio transfer functions in accordance with embodiments of the disclosure.
FIG. 10 is a schematic diagram illustrating modifying the audio signal from each of the one or more microphones and providing an example modified audio signal to a speech recognition engine in accordance with embodiments of the disclosure.

**EP 2 798 633 B1**

## DETAILED DESCRIPTION

Embodiments of the disclosure are described more fully hereinafter with reference to the accompanying drawings, in which embodiments of the disclosure are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. Like numbers refer to like elements throughout.

Embodiments of the disclosure may provide systems, methods, and apparatus for modifying audio signals corresponding to sounds generated at one or more microphones. In one aspect, the microphones may be provided in a closed volume or environment that may be prone to acoustic echoing and/or that may be a noisy acoustic environment, such as the cockpit of a vehicle. The modified audio signals from the one or more microphones may be combined and provided to a speech recognition engine to enable improved speech recognition for various applications, including the recognition of voice commands or textual input within a vehicle. The modified audio signals may be less corrupted by echoes and noise than the non-modified audio signals generated by the microphones. In one aspect, the modified audio signals provided to a speech recognition engine may result in relatively lower word error rates (WERs). Embodiments of the disclosure may further entail determining an acoustic transfer function for each of the one or more microphones based in part upon the location of the sound producing element. In addition, an acoustic model of the volume or environment, such as the cockpit of the vehicle, may be used to determine the acoustic transfer function of each of the one or more microphones. In one aspect, the acoustic model of the volume or environment may be determined by a third party, such as a manufacturer of a vehicle or a suitable service provider.

Example embodiments of the disclosure will now be described with reference to the accompanying figures.

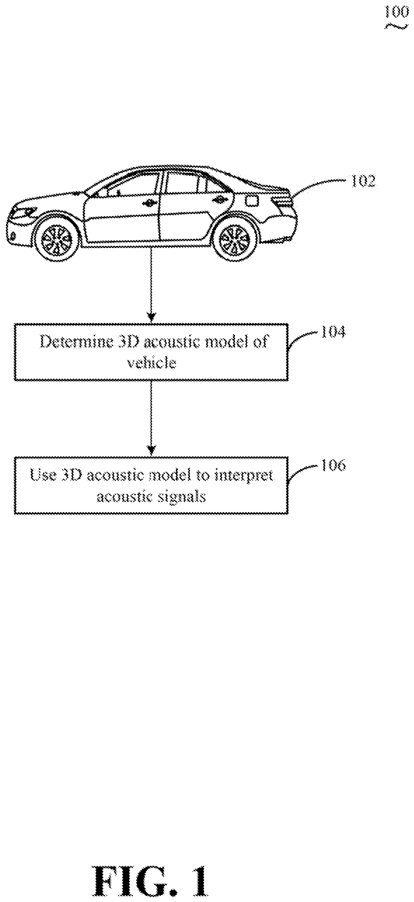

Referring now to FIG. 1, an example method 100 for interpreting acoustic signals in a vehicle 102 in accordance with embodiments of the disclosure is discussed. For the purposes of this discussion, a vehicle 102 can include, but is not limited to, a car, a truck, a light-duty truck, a heavy-duty truck, a pickup truck, a minivan, a crossover vehicle, a van, a commercial vehicle, a private vehicle, a tractor-trailer, an airplane, a jet, a helicopter, a space vehicle, a watercraft, or any other suitable vehicle having a relatively closed cockpit. However, it will be appreciated that embodiments of the disclosure may also be utilized in other environments in which a relatively closed area is provided.

At block 104, a three-dimensional (3-D) acoustic model of the vehicle 102 is determined. In one aspect, the acoustic model of the vehicle may be determined prior to the purchase of the vehicle 102 by an end consumer. For example, a manufacturer of the vehicle or a service provider (e.g., a service provider acting on behalf of the manufacturer, etc.) may determine the acoustic model of the vehicle 102 before the vehicle 102 is provided to a vehicle dealership and subsequently purchased by an end user. Therefore, in one aspect, the end consumer of a vehicle 102 does not have to determine the 3-D acoustic model of the vehicle 102. The 3-D acoustic model of the vehicle 102 may be stored in an electronic memory associated with the vehicle 102. In particular, the electronic memory may be provided within a system for modifying audio signals associated with the vehicle 102.

At block 106, the 3-D acoustic model may be used to interpret or modify acoustic signals. The acoustic signals may be generated based upon compression waves or sound produced within the vehicle 102. For example, the acoustic signals may be generated by microphones that are actuated by sounds generated within the vehicle, such as by the driver of the vehicle 102 or another user within a cockpit of the vehicle 102. Therefore, in essence, an acoustic model of the vehicle 102 is generated and provided which can be used in certain embodiments to more accurately and precisely interpret sounds generated within the vehicle 102. In certain aspects, the acoustic signals may be interpreted by a speech recognition engine to provide speech to text functionality.

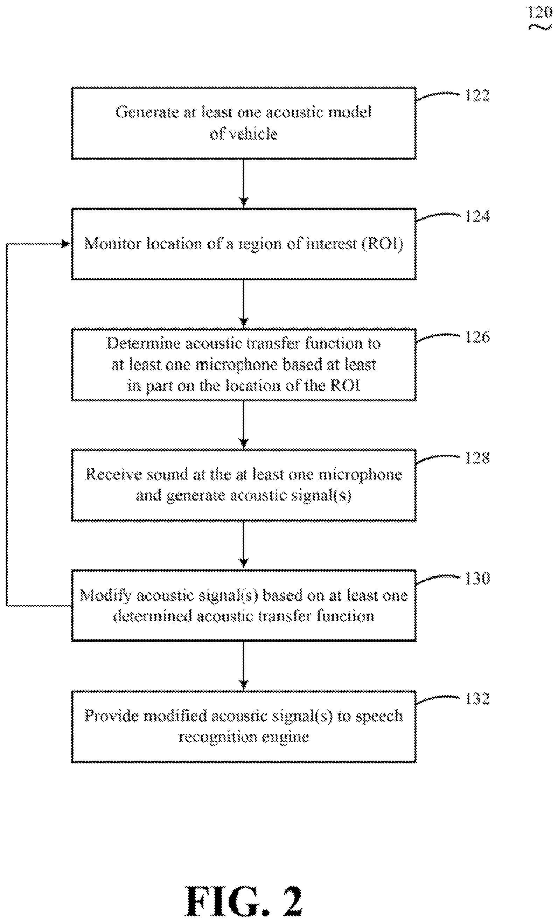

Further details of interpreting audio signals using 3-D acoustic models will now be explained with reference to FIG. 2. A method 120 of providing a modified acoustic signal to a speech recognition engine in accordance with embodiments of the disclosure may include, at block 122, generation of at least one acoustic model, such as a 3-D acoustic model of the vehicle, as described with reference to FIG. 1. In certain embodiments, the acoustic model may be generated by a manufacturer of the vehicle 102. In other embodiments, the acoustic model may be generated by a dealership selling the vehicle 102. In yet other embodiments, the acoustic model may be generated by the end-user, for example, a driver or owner of the vehicle. In one aspect, an acoustic model may be generated for each vehicle 102 manufactured by a vehicle manufacturer. In other aspects, an acoustic model may be provided for each type of vehicle. For example, all vehicles of a particular manufacturer, model, year, and/or trim may be provided with the same acoustic model at block 122.

In certain embodiments, the acoustic model may include acoustic transfer functions corresponding to any number of respective spatial locations within the volume where sound is produced and the resulting acoustic signals are modified. In one aspect, the spatial location may be defined in three-dimensional space resulting in a 3-D acoustic model. Alternatively, the spatial location may be defined in two-dimensional space resulting in a 2-D acoustic model. As a further alternative, the spatial location may be defined in a single dimension resulting in a one-dimensional acoustic model. For the purposes of the remainder of the disclosure, we will consider a 3-D acoustic model; however, it should

3

be noted that the systems, methods, and apparatus described are applicable to non-3-D acoustic models.

Next, at block 124, the location of a region of interest may be monitored. The region of interest may include an acoustic element that produces sound. In one aspect, the region of interest may be a person's lip ring. The lip ring is the region of the face around a person's lips and mouth and includes the lips. The location of the lip ring can, for example, be monitored by an image sensor, such as a charge-coupled device (CCD) based digital camera. In another aspect, the location of the lip ring may be determined using any variety of known distance sensors, such as a range sensor. In certain embodiments, the location of the region of interest may be monitored using both an image sensor and a range sensor.

At block 126, an acoustic transfer function to at least one microphone may be determined based at least in part on the location of the region of interest, as monitored at block 124, in conjunction with the at least one acoustic model of the vehicle 102, as generated at block 122. For example, the acoustic transfer function may be determined by volumetric extrapolation of data provided in the acoustic model of the vehicle 102. As further examples, the acoustic transfer function may be determined by any combination of aerial extrapolation, linear extrapolation, volumetric interpolation, aerial interpolation, linear interpolation, and/or any other known methods of extrapolation or interpolation. The mathematical manipulations, such as extrapolation or interpolation, used to determine or estimate the acoustic transfer function corresponding to each of one or more microphones may include linear, quadratic, nth order polynomial, logarithmic, exponential, and/or any other known mathematical manipulations. In one aspect, an acoustic transfer function may be generated for each of the at least one microphone based at least partly on the location of the region of interest, such as the lip ring. For example, if there are four microphones in the vehicle 102, then four different transfer functions may be generated corresponding to each of the four microphones within the vehicle 102 The four transfer functions may each be generated based upon the location of the lip ring as determined at block 124 and the acoustic model of the vehicle as provided in block 122.

At block 128, sound is received at the at least one microphone, and an acoustic signal corresponding to received sound waves is generated by the at least one microphone. The output of the at least one microphone, therefore, is a non-modified acoustic signal corresponding to each of the at least one microphone. In one aspect, the number of acoustic signals generated may be equal to the number of microphones in the vehicle 102.

At block 130, each of the acoustic signals are modified based on the respective acoustic transfer function corresponding to each of the microphones, as determined at block 128. The non-modified acoustic signal output from each of the microphones may be multiplied by the inverse of the determined corresponding acoustic transfer function to generate a modified acoustic signal.

At block 132, each of the modified acoustic signals may be provided to a speech recognition engine. The speech recognition engine, in turn, may use each of the modified acoustic signals to generate text from speech. The text from speech functionality may be used for various purposes including, but not limited to, voice commands, text message dictation, electronic mail dictation, or the like. In certain embodiments, the modified acoustic signals may optionally be summed prior to provision to the speech recognition engine.

It should be noted that the method 120 may be modified in various ways in accordance with certain embodiments of the disclosure. For example, one or more operations of the method 120 may be eliminated or executed out of order in other embodiments of the disclosure. Additionally, other operations may be added to the method 120 in accordance with other embodiments of the disclosure.

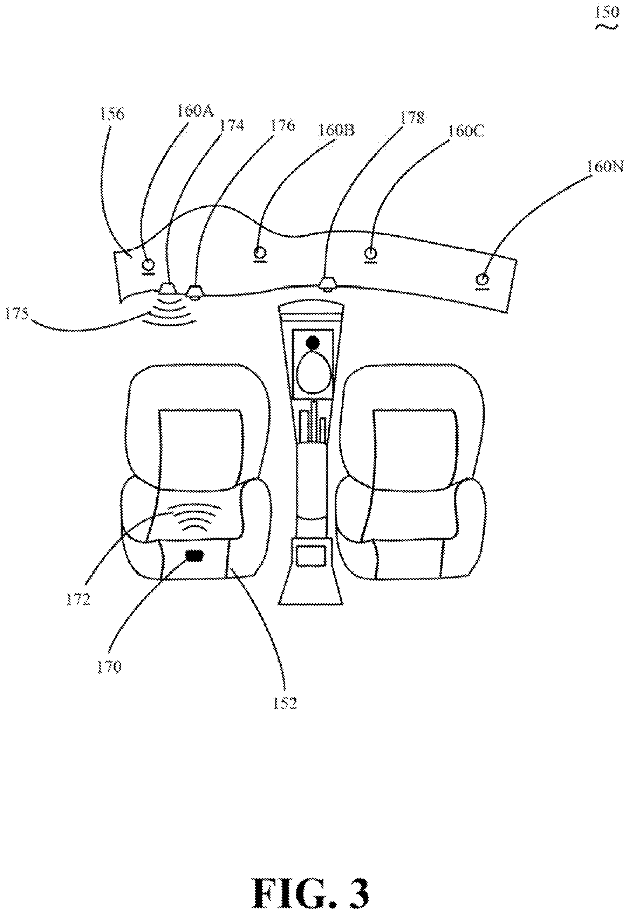

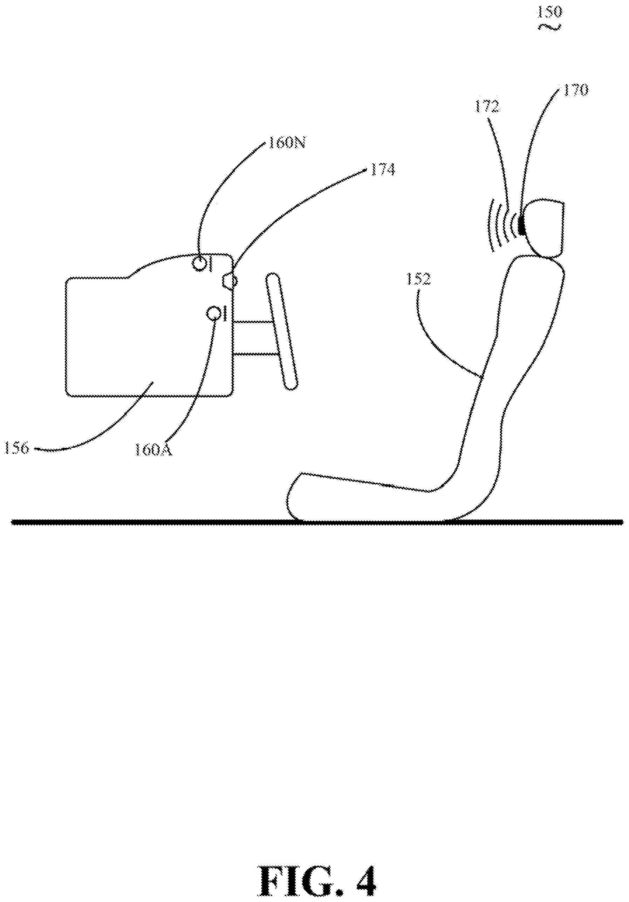

An example process of generating the acoustic model of the vehicle 102 may be implemented within the cockpit 150 of the vehicle 102 as described with reference to FIGS. 3 and 4. The cockpit 150 may include a driver's seat 152, a dashboard 156, and any number of microphones, such as microphones 160A, 160B, 160C, and 160N. A loudspeaker 170 or other suitable sound generation device may be provided in an approximate location where sound may be generated during operation of the vehicle 102. The loudspeaker 170 may emit sound or impulse waves depicted as waves or sound 172 during the generation of the acoustic model. The cockpit 150 may further include a radiation emitter 174 emitting radiation 175 and/or a range sensor 176. The cockpit 150 may yet further include an image sensor 178. Although four microphones 160A-N are depicted, there may be any number of microphones. The microphones may be of any known type including, but not limited to, condenser microphones, dynamic microphones, capacitance diaphragm microphones, piezoelectric microphones, optical pickup microphones, or combinations thereof. Furthermore, the microphones 160A-N may be of any directionality and sensitivity. For example, the microphones 160A-N may be omnidirectional, uni-directional, cardioid, or bi-directional. It should also be noted that the microphones 160A-N may be of the same variety or of a mixed variety. For example, some of the microphones 160A-N may be condenser microphones and others may be dynamic microphones.

The loudspeaker 170 may be of any known variety that can produce sound 172. In one aspect, the loudspeaker 170 may be provided with an electrical signal to generate the sound 172. The sound 172 may be of a variety of tones, magnitude, and rhythm. Rhythm, as used herein, is a succession of sounds and silences. In one aspect, the sound 172 may be a white noise spanning a relatively wide range of frequencies with a relatively consistent magnitude across the range of frequencies. Alternatively, the sound 172 may be pink noise spanning a relatively wide range of frequencies with a variation in magnitude across the range of frequencies. In yet other alternatives, the sound 172 may be an impulse function, a sound spike, mono-tonal or may have a finite number of tones corresponding to a finite number of frequencies of sound compression waves. In one aspect, an impulse function sound may substantially simulate a full spectrum of sound within the cockpit 150.

The range sensor 176 may be of any known variety, for example, an infrared detector. The radiation emitter 174 may emit infrared radiation 175 that can reflect off of an object, and the reflected radiation can be detected by the range sensor 176 to determine a range or distance between the range sensor 176 and the object. For example, the radiation emitter 174 may emit infrared radiation that may reflect off of the face of a driver operating the vehicle 102 and seated in the driver's seat 152. The reflected radiation may then be detected by the range sensor 176 to determine the distance between the range sensor 176 and the driver's face or particularly to the region of interest on the driver's face, such as the driver's lip ring. Although an infrared detector and radiation emitter are described for determining a range to a driver of the vehicle 102, a wide variety of other suitable devices may be utilized to determine a range to a driver, such as ultrasonic sensors.

The image sensor 178 may be any known device that converts an optical image to an electronic signal. The image sensor 178 may be of any known variety including a charge-coupled device (CCD), complementary metal oxide semiconductor (CMOS) sensors, or the like. The image sensor 178 may be of any pixel count and aspect ratio.

During the process of generating the acoustic model of the vehicle 102, the loudspeaker 170 may emit the sound 172 based upon an electronic signal provided to the loudspeaker 170. Each of the microphones 160A-N may be actuated by the sound 172, and an acoustic signal corresponding to each of the speakers 160A-N may be evaluated. By comparing the acoustic signal of each of the microphones 160A-N with the electronic signal provided to the loudspeaker 170, one can determine the physical acoustic transfer function between the loudspeaker 170 and each of the microphones 160A-N. Therefore, it is possible to determine the transfer function from a point in space where sound 172 is emitted to the location of each of the microphones 160A-N. In certain embodiments, it may be possible to determine the physical acoustic transfer function between the position of the loudspeaker 170 and each of the microphones 160A-N by dividing the acoustic signal generated by each of the microphones 160A-N by the electronic signal provided to the loudspeaker 170. In other embodiments, the physical acoustic transfer function between the position of the loudspeaker 170 and each of the microphones 160A-N may be determined using linear mathematical manipulations of both the electronic signal provided to the loudspeaker 170, as well as the acoustic signals that are generated by each of the microphones 160A-N. In yet other embodiments, the physical acoustic transfer function between the position of the loudspeaker 170 and each of the microphones 160A-N may be determined using non-linear mathematical manipulations of both the electronic signal provided by the loudspeaker 170, as well as the acoustic signals that are generated by each of the microphones 160A-N.

The determined physical acoustic transfer function between the position of the loudspeaker 170 and each of the microphones 160A-N may be a function of the location of the loudspeaker 170 in three-dimensional space, as well as a function of frequency of the sound 172. Therefore, the physical acoustic transfer function may be represented in the frequency domain as a function of frequency, such as by the notation $H(\omega)$, where $\omega$ is the frequency of the sound 172. From a physical standpoint, one can see that the transfer function may be a function of frequency, because the frequency is inversely related to the wavelength of the sound waves, and therefore, may have different characteristics during transmission from one point to another related to the frequency. In one aspect, the absorption, reflection, diffusion, or other properties of a particular sound with respect to a particular material or object may be wavelength dependent.

The acoustic model may be generated by determining at least one physical acoustic transfer function from at least one point in space to at least one of the microphones 160AN. The acoustic model, however, may include any number of physical acoustic transfer functions corresponding to multiple locations within the cockpit 150 and to each of the microphones 160A-N. Furthermore, the acoustic model may include one or more noncontiguous segments of a transfer function corresponding to a particular location. For example, the full frequency range to be represented by a transfer function may not be represented by a single linear segment and may have to be partitioned into multiple segments, thereby creating a nonlinear acoustic transfer function between a particular location and a particular microphone 160A-N. Further yet, the acoustic model may include one or more noncontiguous segments of a transfer function corresponding to a particular location.

In certain embodiments, the acoustic model may be generated by moving the loudspeaker 170 to various locations within the cockpit 150 to emit sound 172 from the various locations and determining a physical acoustic transfer function between each of the various locations to each of the microphones 160A-N. In other words, the acoustic model may have a physical transfer function corresponding to each of the microphones 160A-N from one or more locations within the cockpit 150.

In one embodiment, the loudspeaker 170 may be provided on a tripod (not shown) within the cockpit 150 of the vehicle 102 to generate the acoustic model. A test application may be run to receive the location of the loudspeaker 170 and associate the location with the acoustic sound detected at each of the microphones 160A-N. The loudspeaker 170 may emit pink noise and white noise. Alternatively, the loudspeaker 170 may emit an impulse noise. The associated impulse response at that location of the microphones 160A-N may be recorded and then mathematically manipulated to generate a particular physical transfer function at the particular location of the loudspeaker 170. The mathematical manipulation, in one aspect, may be an inversion operation. If the loudspeaker 170 is moved by a predetermined distance from the previous location, such as 20 centimeters (cm), the process of determining a physical transfer function is repeated. In other words, acoustic model generation incorporates physical transfer functions associated with more than one location of the loudspeaker 170. This process may be performed once during manufacturing time and may not need to be performed for each particular driver or after-market configuration of the vehicle 102.

As a non-limiting example, consider that there are four microphones 160A-N within the cockpit 150, and the loudspeaker 170 has been positioned in three different locations within the cockpit 150 during the process of generating the acoustic model. In this case, one can generate four physical acoustic transfer functions corresponding to each of the microphones 160A-N from each of the three different locations within the cockpit 150 for a total of 12 different physical acoustic transfer functions.

In certain embodiments, during the process of generating the acoustic model, the range sensor 176 and the image sensor 178 may be used to determine the location of the loudspeaker 170 to map determined transfer functions to respective locations in three-dimensional space within the cockpit 150. In other embodiments, the range sensor 176 and the image sensor 178 may not be used, and the loudspeaker 170 may be placed in predetermined locations to generate the acoustic model.

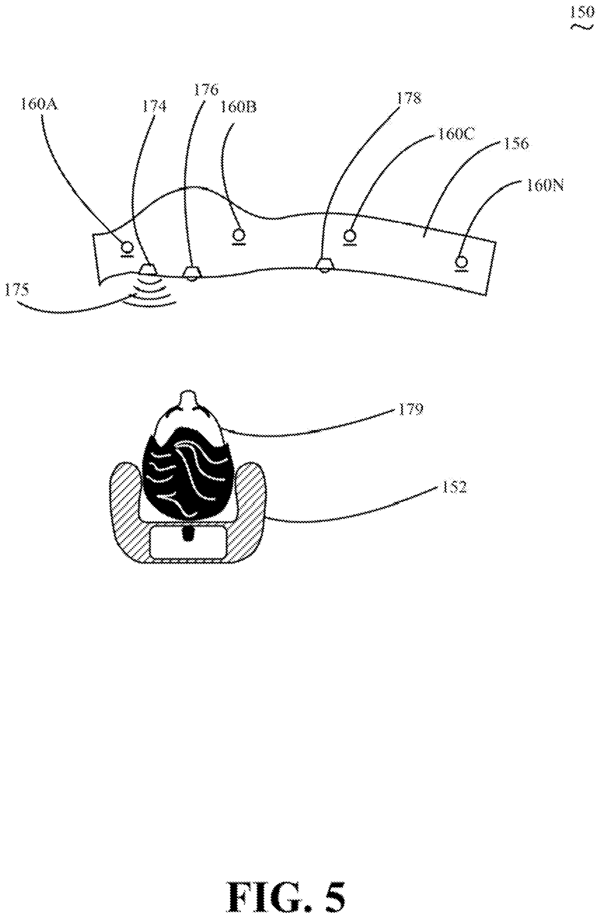

Referring now to FIG. 5, an example mechanism for an example audio element, such as a human, generating acoustic signals transmitted to one or more microphones within the cockpit of the vehicle 102 is described. In particular, a driver 179 may be seated in the driver's seat 152 facing the dashboard 156 as well as the radiation emitter 174, the range sensor 176, and the image sensor 178. The radiation emitter 174 may emit electromagnetic radiation, such as infrared radiation 175, toward the driver 179. The radiation 175 may reflect from the driver's 179 face, and the reflection may be detected by the range sensor 176. The range sensor 176 may produce range sensor signals based on detecting reflected radiation off of the driver 179. Additionally, the image sensor 178 may generate an image sensor signal corresponding to imaging the driver's 179 face. Furthermore, if the driver 179 speaks, the generated sound may be captured by each of the microphones 160A-N provided within the cockpit 150. Each of the microphones 160A-N may generate the respective acoustic signal based on the detected sound from the driver 179.

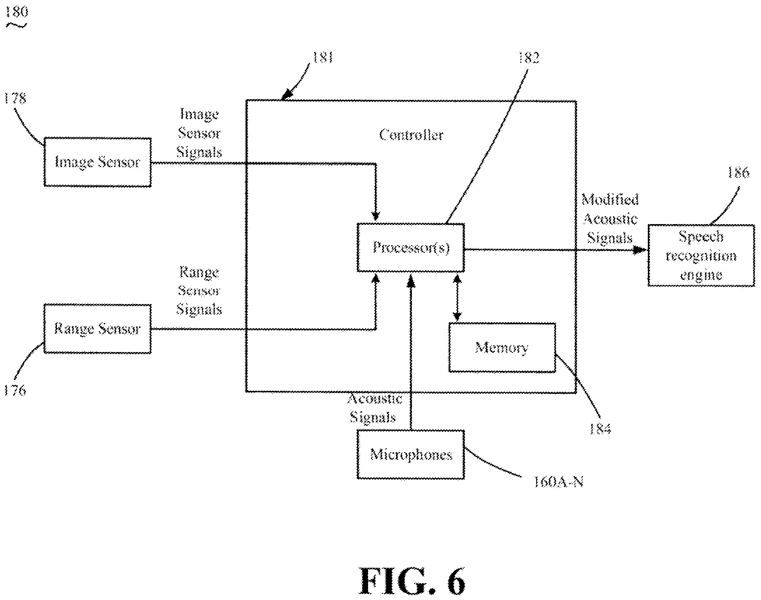

Referring now to FIG. 6, an example system 180 is described for receiving image sensor signals from the image sensor 178, range sensor signals from the range sensor 176, and the acoustic signals from each of the microphones 160A-N in order to generate modified acoustic signals and provide the signals to a speech recognition engine 186. The system 180 may include one or more controllers 181. Each of the one or more controllers 181 may include one or more processors 182 communicatively coupled to any number of suitable electronic memory devices 184 (generally referred to as memory 184). The one or more processors 182 may directly receive each of the sensor signals including the image sensor signals, the range sensor signals, and the non-modified acoustic signals. The electronic memory 184 may have the acoustic model, with constituent physical acoustic transfer functions mapped to particular locations within the cockpit 150, stored thereon.

The one or more processors 182 may accept various sensor signals and determine the location of a region of interest based upon the image sensor signal and the range sensor signal. As stated earlier, the region of interest may include the lip ring of the driver 179. The one or more processors 182 may further use the location of the region of interest along with the acoustic model stored in the memory 184 to estimate a respective acoustic transfer function for each of the microphones 160A-N. In one aspect, the one or more processors 182 may implement various mathematical manipulations of the sensor signals as well as the physical transfer functions that are part of the acoustic model to estimate respective acoustic transfer functions for each of the microphones 160A-N. As stated earlier in conjunction with FIG. 2, the mathematical manipulations may entail one or more of extrapolations or interpolations. Once the one or more processors 182 determine or estimate the acoustic transfer functions for each of the microphones 160A-N, the acoustic signals received by the one or more processors 182 from the microphones 160A-N may be processed utilizing the acoustic transfer functions. In certain embodiments, the one or more acoustic signals received from each of the microphones 160A-N may be multiplied by the inverse of the respective acoustic transfer function corresponding to each of the microphones 160A-N. In other embodiments, a memory-based lag may be implemented on the one or more acoustic signals prior to multiplication by the inverse of the respective acoustic transfer function corresponding to the respective microphone 160A-N. The modified acoustic signals, as generated by the one or more processors 182 based on the acoustic signals provided by each of the microphones 160A-N, may be provided to a speech recognition engine 186. The speech recognition engine 186 may use the modified acoustic signals to provide speech to text functionality, such as for voice commands.

It should be noted that the respective acoustic transfer function corresponding to each of the microphones 160A-N may be determined dynamically. In other words, the acoustic transfer function of a particular microphone may vary with time. More particularly, the acoustic transfer function of a particular microphone may vary as the driver 179 moves his or her head; otherwise the location of the region of interest, such as the lip ring, changes with time. To put it in yet other terms, each of the acoustic transfer functions corresponding to each of the microphones 160A-N, as determined by the one or more processors 182, may be varying with either time or movement of the driver's 179 head or both. In one aspect, an acoustic transfer function corresponding to each of the microphones 160A-N may be determined by the one or more processors 182 with a latency that is less than the time that it takes for sound to travel from a region of interest, or the acoustic element to each of the microphones 160A-N. In other words, there may be a phase difference between the determined respective acoustic transfer function corresponding to each of the microphones 160A-N and the sound arriving at the microphones 160A-N. Therefore, simply using the most recently determined acoustic transfer function for each of the microphones 160A-N to modify the acoustic signals generated by the microphones 160A-N may not provide the desired results. As a result, a time lag may be implemented between a stream of near real time acoustic transfer functions as generated by the one or more processors 182 and acoustic signals generated by each of the microphones 160A-N to compensate for the relative phase difference therebetween. Various mechanisms for implementing a relative time lag between two signals are well-known in the art and will not be reviewed here for purposes of brevity.

The processor(s) 182 may include, without limitation, a central processing unit (CPU), a digital signal processor (DSP), a reduced instruction set computer (RISC), a complex instruction set computer (CISC), a microprocessor, a microcontroller, a field programmable gate array (FPGA), or any combination thereof. The system 180 may also include a chipset (not shown) for controlling communications between the processor(s) 182 and one or more of the other components of the system 180. In one embodiment, the system 180 may be based on an Intel® Architecture system, and the processor(s) 182 and chipset may be from a family of Intel® processors and chipsets, such as the Intel® Atom® processor family. The processor(s) 182 may also include one or more processors as part of one or more application-specific integrated circuits (ASICs) or application-specific standard products (ASSPs) for handling specific data processing functions or tasks.

The memory 184 may include one or more volatile and/or non-volatile memory devices including, but not limited to, random access memory (RAM), dynamic RAM (DRAM), static RAM (SRAM), synchronous dynamic RAM (SDRAM), double data rate (DDR) SDRAM (DDR-SDRAM), RAM-BUS DRAM (RDRAM), flash memory devices, electrically erasable programmable read-only memory (EEPROM), non-volatile RAM (NVRAM), universal serial bus (USB) removable memory, or combinations thereof.

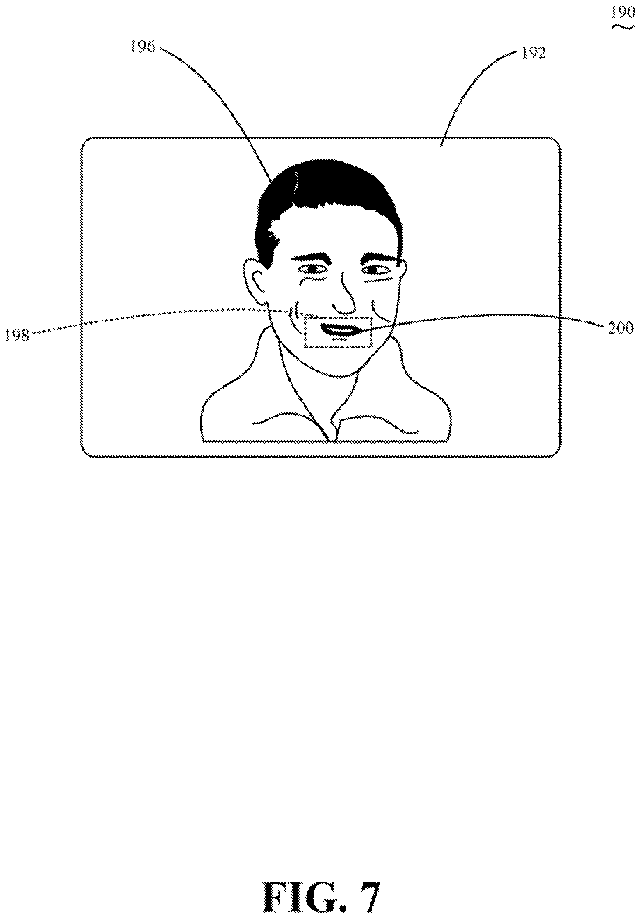

Referring now to FIG. 7, an example analysis of the region of interest based on the image sensor 178 signal corresponding to an image 190, as displayed on an electronic display 192, by the one or more processors 182 is described. An image of a person 196, such as the user of the vehicle or the driver, may be provided. The one or more processors 182 may analyze the overall image 190 and identify the image of a person 196. The one or more processors 182 may further process the image of a person 196 to identify a region of interest 198 further containing the sound producing acoustic element, such as the person's lip ring 200. In one aspect, based on the size of the person's lip ring 200 and the region of interest 198 in the image 190, the one or more processors 182 may be able to ascertain the location of the lip ring 200. In another aspect, the image 190, in conjunction with information provided by the range sensor 176, may be used to determine the location of the lip ring 200 by the one or more processors 182. In other words, the one or more processors 182 may analyze the image 190 as provided by the image sensor 178 and, based on various aspects of the region of interest 198, the one or more processors 182 may be able to determine the location of the source of sound, such as the lip ring 200, for subsequent use in determining or selecting an acoustic transfer function corresponding to each of the microphones 160A-N.

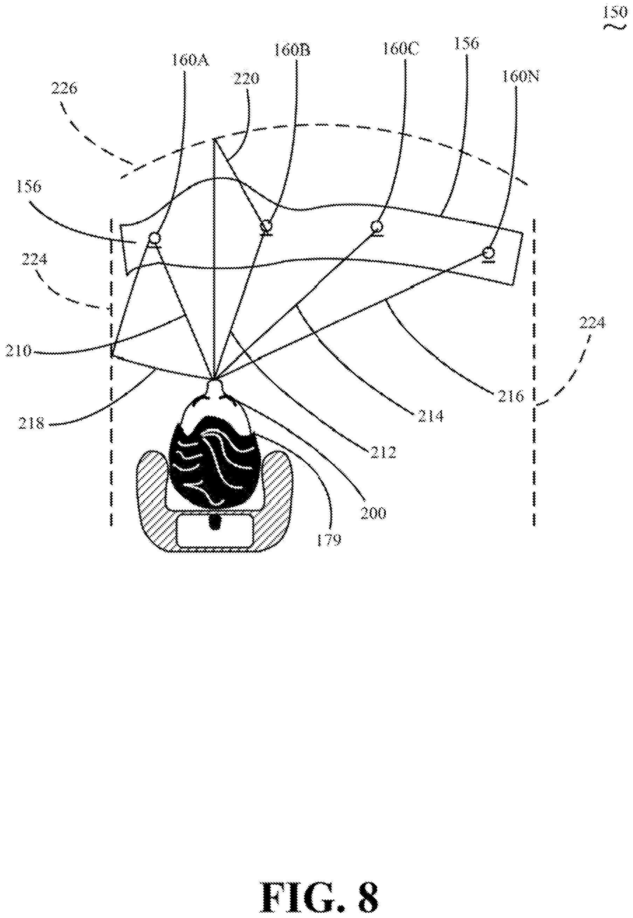

Referring now to FIG. 8, a simplified schematic view illustrating an example transmission of sound from an acoustic element, such as the lip ring 200, to the one or more microphones 160A-N is described. For the purposes of illustrating the respective paths 210, 212, 214, 216, 218 and 220 of various sound waves, side windows 224 and a windshield 226 of the cockpit 150 are shown. It can be seen that some of the sound waves may travel a direct path 210, 212, 214, and 216 between the lip ring 200 and one or more of the microphones 160A-N. Additionally, some of the sound waves may travel via an indirect path, 218 and 220, reflecting off of one or more objects within the cockpit 150 of the vehicle 102. For example, as depicted sound traversing the path 218 is shown to reflect off of the side window 224 prior to reaching the microphone 160A. Similarly, sound traversing the path 220 is shown to reflect off of the windshield 226 prior to arriving at the microphone 160B. Therefore, at microphone 160A, sound is arriving via paths 210 and 218, where there may be a relative phase difference between the sound arriving from each of these paths 210 and 218 due to a path length difference between the paths 210 and 218. As a result, the microphone 160A may be actuated in a manner such that the resulting non-modified acoustic signal may include any number of artifacts, such as echoes. In one aspect, the sound generated by microphones 160A and 160B may be garbled, difficult to understand, or unintelligible due to the multiple paths 210, 218, 212, and 220 by which sound arrives from the lip ring 200. The non-modified acoustic signals generated by the one or more microphones 160A-N are provided to the one or more processors 182. Therefore, it can be seen that prior to modification by the one or more processors 182, the non-modified acoustic signals may contain various artifacts and noise.

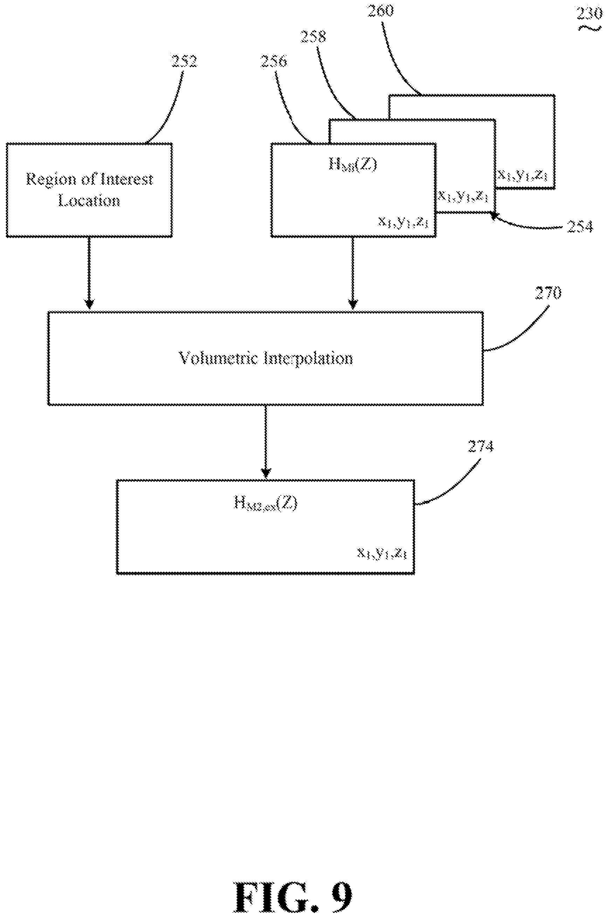

Referring to FIG. 9, a simplified block diagram 230 depicting the determination of an acoustic transfer function corresponding to each of the microphones 160A-N is illustrated. The lip ring or region of interest location 252, as determined at block 124, as well as the acoustic model 254 as determined at block 122 and stored in the memory 184, are provided to the one or more processors 182. As discussed in reference to FIGS. 3 and 4, the acoustic model 254 may include one or more physical acoustic transfer functions depicted as $H_{Mi}(Z)$ at a particular location $(x_1, y_1, z_1)$ within the cockpit 150. In the notation used, H is a mathematical function of a discretized frequency Z and Mi is the $i^{th}$ microphone. For example, the microphone 160B may have a designation M2 indicating the microphone 160B as the second microphone, and $(x_1, y_1, z_1)$ defines a particular point in space using Cartesian coordinates, where the acoustic model 254 provides a physical transfer function $H_{Mi}(Z)$ for a particular microphone Mi. Points in space, such as within the cockpit 150 of the vehicle 102, may be defined in non-Cartesian coordinate systems, such as spherical or cylindrical coordinates in certain embodiments of the invention. The one or more processors 182 may perform a volumetric interpolation 270 based upon the region of interest location 252 and the acoustic model 254 to determine an acoustic transfer function $H_{Mi,ex}(Z)$ corresponding to microphone Mi at a particular location $(x_2, y_2, z_2)$.

The volumetric interpolation 270, as performed by the one or more processors, will now be described by way of a non-limiting example. Consider, for example, that the acoustic model 254 provides a physical transfer function $H_{Mi}(x_1, y_1, z_1)$ for microphone Mi at location $(x_1, y_1, z_1)$ and a physical transfer function $H_{Mi}(x_3, y_3, z_3)$ for the same microphone Mi at location $(x_2, y_2, z_2)$. Further consider that the region of interest location indicates a location of the region of interest at $(x_2, y_2, z_2)$, where $x_2$ is within the range of $x_1$ and $x_3$, $y_2$ is within the range of $y_1$ and $y_3$, and $z_2$ is within the range of $z_1$ and $z_3$. In such a case, a linear volumetric interpolation 270 may be performed by the one or more processors 182 in accordance with equation (1) below:

$$H_{Mi,ex}(Z) = \frac{(x_1 - x_2)}{(x_1 - x_3)}\left[H(Z)_{Mi(x_1,y_1,z_1)} - H(Z)_{Mi(x_3,y_3,z_3)}\right] + \frac{(y_1 - y_2)}{(y_1 - y_3)}\left[H(Z)_{Mi(x_1,y_1,z_1)} - H(Z)_{Mi(x_3,y_3,z_3)}\right]$$
$$+ \frac{(z_1 - z_2)}{(z_1 - z_3)}\left[H(Z)_{Mi(x_1,y_1,z_1)} - H(Z)_{Mi(x_3,y_3,z_3)}\right]$$

$$(1)$$

Although an example of linear volumetric interpolation is shown, it should be noted that any interpolation method may be used including, but not limited to, quadratic, nth order polynomial, logarithmic, exponential, or any other known mathematical manipulations. Furthermore, extrapolation or other mathematical techniques may be used by the one or more processors 182 to arrive at the determined acoustic transfer function $H_{Mi,cx}(Z)$.

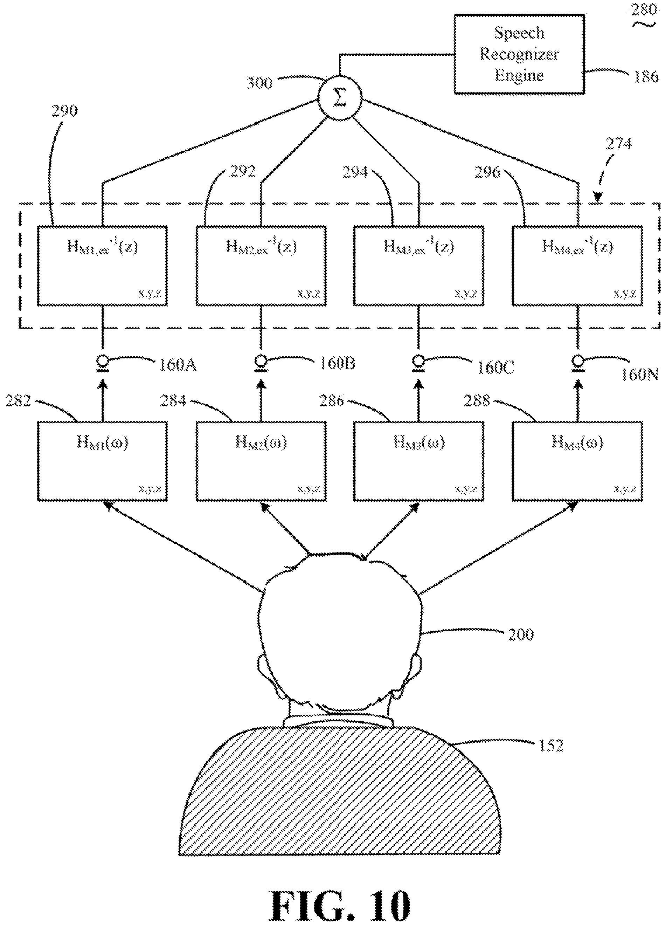

Referring now to FIG. 10, a schematic diagram 280 illustrating the one or more processors 182 providing an example modified acoustic signal to the speech recognition engine 186 is depicted. As shown, the acoustic element, such as the lip ring 200, provides sound to each of the microphones 160A-N. Each of the pathways to the microphones 160A-N may have a respective physical acoustic transfer function 282, 284, 286, and 288 associated therewith from the location (x, y, z) of the lip ring 200. Using the procedures described in conjunction with FIG. 9, the one or more processors 182 may generate an estimated transfer function corresponding to the physical acoustic transfer functions to 282, 284, 286, 288. The one or more processors 182 may further take the inverse of each of the determined transfer functions 290, 292, 294, and 296 and multiply the inverse of each of the determined transfer functions 274 with the non-modified acoustic signals generated by the respective microphones 160A-N to generate modified acoustic signals. The modified acoustic signals may further be summed using a summation 300, and the sum may be provided to the speech recognition engine 186.

It should be noted that, in certain embodiments, the modified acoustic signals from each of the microphones may not be summed. Instead, a subset of the modified acoustic signals may be summed and provided to the speech recognition engine 186. As a further alternative, the one or more processors 182 may determine which of the modified acoustic signals are most likely to provide the best performance in conjunction with the speech recognition engine 186 for purposes of speech-to-text functionality. As yet a further possibility, each of the modified acoustic signals may be provided to a respective speech recognition engine, and the speech-to-text output of each of the speech recognition engines may be post-processed to provide improved speech-to-text functionality.

Embodiments described herein may be implemented using hardware, software, and/or firmware, for example, to perform the methods and/or operations described herein. Certain embodiments described herein may be provided as a tangible machine-readable medium storing machine-executable instructions that, if executed by a machine, cause the machine to perform the methods and/or operations described herein. The tangible machine-readable medium may include, but is not limited to, any type of disk including floppy disks, optical disks, compact disk read-only memories (CD-ROMs), compact disk rewritables (CD-RWs), magneto-optical disks, semiconductor devices such as read-only memories (ROMs), random access memories (RAMs) such as dynamic and static RAMs, erasable programmable read-only memories (EPROMs), electrically erasable programmable read-only memories (EEPROMs), flash memories, magnetic or optical cards, or any type of tangible media suitable for storing electronic instructions. The machine may include any suitable processing or computing platform, device or system and may be implemented using any suitable combination of hardware and/or software. The instructions may include any suitable type of code and may be implemented using any suitable programming language. In other embodiments, machine-executable instructions for performing the methods and/or operations described herein may be embodied in firmware.

Various features, aspects, and embodiments have been described herein. The features, aspects, and embodiments are susceptible to combination with one another as well as to variation and modification, as will be understood by those having skill in the art. The present disclosure should, therefore, be considered to encompass such combinations, variations, and modifications.

The terms and expressions which have been employed herein are used as terms of description and not of limitation. In the use of such terms and expressions, there is no intention of excluding any equivalents of the features shown and described (or portions thereof), and it is recognized that various modifications are possible within the scope of the claims. Other modifications, variations, and alternatives are also possible. Accordingly, the claims are intended to cover all such equivalents.

While certain embodiments of the invention have been described in connection with what is presently considered to be the most practical implementations, it is to be understood that the invention is not to be limited to the disclosed embodiments, but on the contrary, is intended to cover various modifications and equivalent arrangements included within the scope of the claims. Although specific terms are employed herein, they are used in a generic and descriptive sense only, and not for purposes of limitation.

This written description uses examples to disclose certain embodiments of the invention, including the best mode, and also to enable any person skilled in the art to practice certain embodiments of the invention, including making and using any devices or systems and performing any incorporated methods. The patentable scope of certain embodiments of the invention is defined in the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

**Claims**

1. A method, comprising:

   receiving a sound (172) from a loudspeaker (170) at each of a plurality of microphones (160 A-N);
   determining an acoustic model comprising a plurality of acoustic transfer functions between the loudspeaker (170) and each of the microphones (160 A-N);
   receiving, by one or more processors, said acoustic model;
   monitoring the location of at least one acoustic element that produces sound; determining, by the one or more processors, a respective acoustic transfer function corresponding to each of said microphones (160 A-N) based at least in part on the acoustic model and the location of the at least one acoustic element; receiving an acoustic signal from each of the microphones (160 A-N); and
   multiplying, by one or more processors, each of the received acoustic signals with the inverse of the corresponding acoustic transfer function of the respective microphone.

2. The method of claim 1, wherein the acoustic model comprises at least one initial transfer function, each of the at least one initial transfer function corresponding to at least one predetermined location.

3. The method of claim 1, wherein the at least one acoustic element is a shape of a mouth associated with an individual.

4. The method of claim 1, wherein monitoring the location of at least one acoustic element comprises imaging the at least one acoustic element using an image sensor.

5. The method of claim 1, wherein the location of the at least one acoustic element is defined as a point in three-dimensional space.

6. The method of claim 1, wherein monitoring the location of the at least one acoustic element comprises determining a distance between the at least one acoustic element and a range sensor using the range sensor.

7. The method of any of claims 1 to 6, wherein determining the acoustic transfer function comprises at least one of:
   (i) a volumetric interpolation; (ii) a volumetric extrapolation; (iii) a two dimensional interpolation; (iv) a two-dimensional extrapolation; (v) a single dimensional interpolation; or (vi) a single dimensional extrapolation.

8. A system comprising:

a loudspeaker (170);
at least one sensor configured to provide information of a region of interest associated with a user;
one or more microphones (160 A-N), each microphone configured to generate an acoustic signal based upon a detected sound;
at least one computer-readable medium with an acoustic model stored thereon, said acoustic model comprising a plurality of physical acoustic transfer functions between the loudspeaker (170) and each of the microphones (160A-N); said acoustic model determined from a sound (172) from the loudspeaker (170) received at each of the plurality of microphones (160 A-N);
and
at least one processor communicatively coupled to the at least one sensor, the computer-readable medium, and the one or more microphones and configured to multiply each of the acoustic signals at the respective microphones with the inverse of the corresponding acoustic transfer functions based at least in part on the information of the region of interest and the acoustic model.

9. The system of claim 8, wherein the at least one sensor comprises at least one of a range sensor or an image sensor.

10. The system of claim 8, wherein the at least one processor is configured to modify each of the acoustic signals by determining an acoustic transfer function corresponding to each of the at least one microphone based on the information of the region of interest and the acoustic model.

11. The system of any of claims 8 to 10, further comprising a speech recognition engine receiving at least one of each of the modified acoustic signals.

12. At least one computer-readable medium comprising computer-executable instructions that, when executed by one or more processors, execute a method according to one of claims 1 to 7.

**Patentansprüche**

1. Verfahren, umfassend:

Empfangen eines Tons (172) von einem Lautsprecher (170) an jedem einer Vielzahl von Mikrofonen (160A-N);
Bestimmen eines akustischen Modells, das eine Vielzahl von akustischen Übertragungsfunktionen zwischen dem Lautsprecher (170) und jedem der Mikrofone (160A-N) umfasst;
Empfangen, durch einen oder mehrere Prozessoren, des akustischen Modells;
Überwachen des Standorts von mindestens einem akustischen Element, das Ton erzeugt;
Bestimmen, durch den einen oder die mehreren Prozessoren, einer jeweiligen akustischen Übertragungsfunktion, die jedem der Mikrofone (160A-N) zumindest teilweise basierend auf dem akustischen Modell und dem Standort des mindestens einen akustischen Elements entspricht;
Empfangen eines akustischen Signals von jedem der Mikrofone (160A-N); und
Multiplizieren, durch einen oder mehrere Prozessoren, von jedem der empfangenen akustischen Signale mit der Umkehrfunktion der entsprechenden akustischen Übertragungsfunktion des jeweiligen Mikrofons.

2. Verfahren nach Anspruch 1, wobei das akustische Modell mindestens eine anfängliche Übertragungsfunktion umfasst, wobei jede der mindestens einen anfänglichen Übertragungsfunktionen mindestens einem vorbestimmten Standort entspricht.

3. Verfahren nach Anspruch 1, wobei das mindestens eine akustische Element eine Mundform ist, die einer Person zugeordnet ist.

4. Verfahren nach Anspruch 1, wobei das Überwachen des Standorts von mindestens einem akustischen Element das Abbilden des mindestens einen akustischen Elements unter Verwendung eines Bildsensors umfasst.

5. Verfahren nach Anspruch 1, wobei der Standort des mindestens einen akustischen Elements als ein Punkt im dreidimensionalen Raum definiert ist.

6. Verfahren nach Anspruch 1, wobei das Überwachen des Standorts des mindestens einen akustischen Elements das Bestimmen eines Abstands zwischen dem mindestens einen akustischen Element und einem Entfernungssensor unter Verwendung des Entfernungssensors umfasst.

7. Verfahren nach einem der Ansprüche 1 bis 6, wobei das Bestimmen der akustischen Übertragungsfunktion mindestens eines der Folgenden umfasst: (i) eine volumetrische Interpolation; (ii) eine volumetrische Extrapolation; (iii) eine zweidimensionale Interpolation; (iv) eine zweidimensionale Extrapolation; (v) eine eindimensionale Interpolation; oder (vi) eine eindimensionale Extrapolation.

8. System, umfassend:

   einen Lautsprecher (170);
   mindestens einen Sensor, der konfiguriert ist, um eine Information einer Interessensregion bereitzustellen, die einem Benutzer zugeordnet ist;
   ein oder mehrere Mikrofone (160A-N), wobei jedes Mikrofon konfiguriert ist, um ein akustisches Signal basierend auf einem erfassten Ton zu erzeugen;
   mindestens ein computerlesbares Medium mit einem darauf gespeicherten akustischen Modell, wobei das akustische Modell eine Vielzahl von physischen akustischen Übertragungsfunktionen zwischen dem Lautsprecher (170) und jedem der Mikrofone (160A-N) umfasst; wobei das akustische Modell durch einen Ton (172) von dem Lautsprecher (170) bestimmt wird, der an jedem der Vielzahl von Mikrofonen (160A-N) empfangen wird; und
   mindestens einen Prozessor, der kommunikativ mit dem mindestens einen Sensor, dem computerlesbaren Medium und dem einen oder den mehreren Mikrofonen verbunden und konfiguriert ist, um jedes der akustischen Signale an den jeweiligen Mikrofonen mit der Umkehrfunktion der entsprechenden akustischen Übertragungsfunktionen zumindest teilweise basierend auf der Information der Interessensregion und des akustischen Modells zu multiplizieren.

9. System nach Anspruch 8, wobei der mindestens eine Sensor mindestens einen Entfernungssensor oder einen Bildsensor umfasst.

10. System nach Anspruch 8, wobei der mindestens eine Prozessor konfiguriert ist, um jedes der akustischen Signale durch Bestimmen einer akustischen Übertragungsfunktion zu modifizieren, die jedem des mindestens einen Mikrofons basierend auf der Information der Interessensregion und des akustischen Modells zu modifizieren.

11. System nach einem der Ansprüche 8 bis 10, ferner umfassend ein Spracherkennungsmodul, das mindestens eines von jedem der modifizierten akustischen Signale empfängt.

12. Mindestens ein computerlesbares Medium, das computerausführbare Anweisungen umfasst, die bei Ausführung durch einen oder mehrere Prozessoren ein Verfahren nach einem der Ansprüche 1 bis 7 ausführen.

**Revendications**

1. Procédé, comprenant :

   la réception d'un son (172) à partir d'un haut-parleur (170) au niveau de chacun d'une pluralité de microphones (160 A-N) ;
   la détermination d'un modèle acoustique comprenant une pluralité de fonctions de transfert acoustique entre le haut-parleur (170) et chacun des microphones (160 A-N) ;
   la réception, par un ou plusieurs processeurs, dudit modèle acoustique ;
   la surveillance de l'emplacement d'au moins un élément acoustique qui produit du son ;
   la détermination, par lesdits un ou plusieurs processeurs, d'une fonction de transfert acoustique respective correspondant à chacun desdits microphones (160 A-N) sur la base au moins en partie du modèle acoustique et de l'emplacement dudit au moins un élément acoustique ;
   la réception d'un signal acoustique à partir de chacun des microphones (160 A-N) ; et
   la multiplication, par un ou plusieurs processeurs, de chacun des signaux acoustiques reçus par l'inverse de la fonction de transfert acoustique correspondante du microphone respectif.

2. Procédé selon la revendication 1, dans lequel le modèle acoustique comprend au moins une fonction de transfert initiale, chacune de ladite au moins une fonction de transfert initiale correspondant à au moins un emplacement prédéterminé.

3. Procédé selon la revendication 1, dans lequel ledit au moins un élément acoustique est une forme d'une bouche associée à un individu.

4. Procédé selon la revendication 1, dans lequel la surveillance de l'emplacement d'au moins un élément acoustique comprend l'imagerie dudit au moins un élément acoustique en utilisant un capteur d'image.

5. Procédé selon la revendication 1, dans lequel l'emplacement dudit au moins un élément acoustique est défini comme un point dans un espace tridimensionnel.

6. Procédé selon la revendication 1, dans lequel la surveillance de l'emplacement dudit au moins un élément acoustique comprend la détermination d'une distance entre ledit au moins un élément acoustique et un capteur de distance en utilisant le capteur de distance.

7. Procédé selon l'une quelconque des revendications 1 à 6, dans lequel la détermination de la fonction de transfert acoustique comprend au moins l'une parmi : (i) une interpolation volumétrique ; (ii) une extrapolation volumétrique ; (iii) une interpolation bidimensionnelle ; (iv) une extrapolation bidimensionnelle ; (v) une interpolation unidimensionnelle ; ou (vi) une extrapolation unidimensionnelle.

8. Système comprenant :

un haut-parleur (170) ;
au moins un capteur configuré pour fournir des informations d'une région d'intérêt associée à un utilisateur ;
un ou plusieurs microphones (160 A-N), chaque microphone étant configuré pour générer un signal acoustique sur la base d'un son détecté ;
au moins un support lisible par ordinateur sur lequel est stocké un modèle acoustique stocké, ledit modèle acoustique comprenant une pluralité de fonctions de transfert acoustique physique entre le haut-parleur (170) et chacun des microphones (160A-N) ; ledit modèle acoustique étant déterminé à partir d'un son (172) provenant du haut-parleur (170) reçu au niveau de chacun de la pluralité de microphones (160 A-N) ; et
au moins un processeur couplé communicativement audit au moins un capteur, au support lisible par ordinateur et auxdits un ou plusieurs microphones, et configuré pour multiplier chacun des signaux acoustiques au niveau des microphones respectifs par l'inverse des fonctions de transfert acoustique correspondantes sur la base au moins en partie des informations de la région d'intérêt et du modèle acoustique.

9. Système selon la revendication 8, dans lequel ledit au moins un capteur comprend au moins l'un parmi un capteur de distance ou un capteur d'image.

10. Système selon la revendication 8, dans lequel ledit au moins un processeur est configuré pour modifier chacun des signaux acoustiques en déterminant une fonction de transfert acoustique correspondant à chacun dudit au moins un microphone sur la base des informations de la région d'intérêt et du modèle acoustique.

11. Système selon l'une quelconque des revendications 8 à 10, comprenant en outre un moteur de reconnaissance de la parole recevant au moins l'un de chacun des signaux acoustiques modifiés.

12. Au moins un support lisible par ordinateur comprenant des instructions exécutables par ordinateur qui, lorsqu'elles sont exécutées par un ou plusieurs processeurs, exécutent un procédé selon l'une des revendications 1 à 7.

100

102

Determine 3D acoustic model of vehicle — 104

Use 3D acoustic model to interpret acoustic signals — 106

# FIG. 1

120

Generate at least one acoustic model of vehicle — 122

Monitor location of a region of interest (ROI) — 124

Determine acoustic transfer function to at least one microphone based at least in part on the location of the ROI — 126

Receive sound at the at least one microphone and generate acoustic signal(s) — 128

Modify acoustic signal(s) based on at least one determined acoustic transfer function — 130

Provide modified acoustic signal(s) to speech recognition engine — 132

FIG. 2

**FIG. 3**

**FIG. 4**

**FIG. 5**

**FIG. 6**

EP 2 798 633 B1

**FIG. 7**

FIG. 8

**FIG. 9**

**FIG. 10**

**EP 2 798 633 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009086998 A